# EUROPÄISCHE PATENTSCHRIFT

(11) **EP 1 147 844 B1**
(45) Veröffentlichungstag und Bekanntmachung des Hinweises auf die Patenterteilung: **23.07.2008**
(21) Anmeldenummer: 01109569.2
(22) Anmeldetag: 18.04.2001
(51) Int. Cl.: B23K 1/00, B23K 10/00

(54) **Verfahren zum Plasma-Pulver-Löten**
Method of plasma powder brazing
Méthode de brasage plasma avec poudre

(30) Priorität: 18.04.2000 DE 10019095
(43) Veröffentlichungstag der Anmeldung: 24.10.2001
(73) Patentinhaber: MEC - Holding GmbH, 65830 Kriftel (DE)
(72) Erfinder: Giessler, Stefan, 35396 Giessen (DE)
(74) Vertreter: Staudt, Armin Walter

(56) Entgegenhaltungen:
- EP-A- 0 595 601
- EP-A- 0 865 857
- EP-A- 1 065 297
- DE-A- 4 120 791
- DE-A- 19 952 043
- JP-A- 3 226 372
- JP-A- 60 111 771
- US-A- 4 739 146
- US-A- 5 021 629
- US-A- 5 340 015
- US-A- 5 964 395

## Beschreibung

Die Erfindung betrifft ein Verfahren zum thermischen Fügen von Teilen, insbesondere Metallteilen, mittels Plasma-Löten unter Zufuhr von Zusatzwerkstoff, wie Lotwerkstoff, insbesondere zum Fügen galvanischer oder feuerverzinkter Halbzeuge, Werkstücke oder dergleichen Teile gemäß dem Oberbegriff des Anspruchs 1 (siehe, z.B., JP 3/226 372).

Ein derartiges Verfahren ist an sich bekannt und wird vor allem bei beschichteten Feinblechen oder dergleichen eingesetzt. Zink hat sich als Beschichtungswerkstoff wegen seiner positiven Korrosionsschutzeigenschaften, insbesondere der kathodischen Fernwirkung, in der Automobilindustrie, der Bauwirtschaft sowie der Lüftungs- und Klimatechnik in Form von galvanisch oder feuerverzinkten Halbzeugen etabliert. Aufgrund besonderer Aspekte beim Schweißen zinkbeschichteter Halbzeuge, wie zum Beispiel Spritzerneigung, Verbrennen der Zinkschicht, Gaseinschlüsse in der Naht, instabiler Prozeß und gesundheitsgefährdende Dämpfe, werden häufig die schonenderen Lötverfahren wie MSG-Löten, Plasma-Löten oder auch Laserstrahl-Löten eingesetzt. Diese Verfahren haben sich aufgrund ihrer spezifischen Vor- und Nachteile in verschiedenen Anwendungsgebieten etabliert. Einschränkungen bestehen jedoch im Bereich der Zugänglichkeit insbesondere beim Plasma-Löten, der Spritzerneigung und der thermischen Beeinflussung insbesondere beim MSG-Löten und der Wirtschaftlichkeit beziehungsweise der Anforderungen an die Nahttoleranzen insbesondere beim Laser-Löten.

Insbesondere beim Plasma-Löten wird der Zusatzwerkstoff in Form von Endlosdraht dem Lötprozeß beziehungsweise dem Plasmastrahl zugeführt. Dadurch kommt es vor allem beim automatisierten Einsatz zu Problemen. Der auf einer Spule aufgewickelte Draht verändert aufgrund seiner Vorbiegung die Lage relativ zum Plasmagas beziehungsweise Plasmastrahl, da der Draht wegen der Wärmestrahlung nicht bis in den Wirkpunkt des Plasmastrahles hineingeführt werden kann. Auch ist die benötigte Prozeßenergie relativ hoch, da der Zusatzwerkstoff in Form von massivem Draht vorliegt und aufgeschmolzen werden muß. Hier spielt das ungünstige Verhältnis von Oberfläche/Volumen und auch die Wärmeableitung durch den Draht eine nicht zu unterschätzende Rolle. Die Ausbildung tropfenförmiger Drahtenden nach dem Abschalten des Drahtvorschubes sorgt für Probleme beim Wiederanlaufen des Prozesses und macht gegebenenfalls ein Abschneiden des Drahtendes und eine Neupositionierung des Drahtes notwendig. Die Einkoppelung des Drahtes in den Prozeß erfordert eine aufwendige Positionierung. Optimal ist eine schleppende, leicht schräge und fast parallel zur Werkstückoberfläche ausgerichtete Anordnung des Drahtes. Dies verursacht in jedem Fall eine Störgeometrie, welches das automatisierte Plasmalöten an schwer zugänglichen Fügezonen erschwert oder unmöglich macht. Weiterhin wird durch die Zuführung des Drahtes von außen in das Plasmagas der das Plasmagas in der Regel umhüllende Schutzgasmantel durchbrochen, wodurch unerwünschte Reaktionen der Prozeßpartner mit dem Atmosphärengas entstehen können. Aufgrund des vorlaufenden Plasmastrahles kann die Zinkschicht der beschichteten Werkstücke lokal stark überhitzt werden und unter Umständen sogar verdampfen.

Aus DE-Z "Werkstattstechnik" 53 (1965) Nr. 12 S 603 bis 606 ist es bereits bekannt zum Aufbringen von verschleißfesten Überzügen auf Werkstücken pulverförmige Werkstoffe mit Hilfe der Energie eines Plasmastrahles aufzutragen. Bei dieser Beschichtungstechnik werden niedrig schmelzende Legierungen eingesetzt, um eine Vermischung zwischen Grundwerkstoff und Beschichtungswerkstoff zu erzielen und dabei die Eigenschaften des Beschichtungswerkstoffes möglichst unverfälscht zu erhalten und darüber hinaus die in den Grundwerkstoff einzulagernden Hartstoffpartikel vor zu hoher Erwärmung zu schützen.

Demgegenüber liegt der Erfindung die Aufgabe zugrunde, ein Verfahren mit den eingangs genannten Merkmalen dahingehend weiterzubilden, daß ein verbessertes Plasma-Löten von insbesondere verzinkten Werkstücken ermöglich ist.

Die Erfindung ist im Anspruch 1 definiert.

Durch diese Maßnahme kann von Vorteil auf den Einsatz eines steifen Drahtes als Zusatzwerkstoff verzichtet werden und die Zuführung des Zusatzwerkstoffes in Pulverform ohne geometrische Zwänge erfolgen. Durch die Freiheit bei der Gestaltung und Positionierung der Pulveraustrittsöffnung kann das Pulver hinreichend genau dem Lötprozeß zugeführt werden. Die Auf-/Anschmelzung des pulverförmigen Zusatzwerkstoffes ist insbesondere bei einem feinkörnigen Pulver wesentlich besser als bei einem Massivdraht, da eine erheblich vergrößerte Oberfläche zur Aufnahme von Wärmeenergie vorliegt und die Wärmeableitung im Vergleich zu einem Draht minimiert ist. Infolge dessen kann auch die Energie des Plasmastrahls präzise eingestellt werden, so daß ein Verbrennen der Zinkschicht beziehungsweise ein Verdampfen weitestgehend vermieden werden kann. Bei Unterbrechung des Lötvorganges ist es lediglich erforderlich, die Pulverförderung abzuschalten, gegebenenfalls auch den Lichtbogen. In jedem Fall kann sich bei dem Einsatz des pulverförmigen Zusatzwerkstoffes ein Lottropfen nicht bilden, der für den Wiederstart des Prozesses aufwendig entfernt werden müßte.

Gemäß der Erfindung wird das Material des Werkstückes durch die Einwirkung des übertragenden Plasma-Lichtbogens nicht in schmelzflüssigen Zustand versetzt. Vielmehr wird bei dem erfindungsgemäßen Löten ein Zusatzmaterial verwendet, dessen Schmelzpunkt unter dem der zu verbindenden Werkstücke liegt. Gemäß der Erfindung wird durch die Einwirkung einer Wärmequelle der Zusatzwerkstoff in schmelzflüssigen Zustand versetzt und verläuft an den zu verbindenden Werkstücken, die annähernd die gleiche Temperatur haben, aber aufgrund ihres höheren Schmelzpunktes sich während des gesamten Fügevorgangs im festen Aggregatzustand befinden. Wenn nun die Werkstücke und das aufgebrachte Lot abkühlen (sofern keine Wärme mehr eingebracht wird), verfestigt sich das Lot und verbindet die Werkstücke.

Von Vorteil wird nach einer Ausgestaltung der Erfindung der Zusatzwerkstoff mittels eines Fördergases, insbesondere einem Inertgas, von einem Vorratsbehälter oder dergleichen über eine oder mehrere Zufuhrleitungen oder dergleichen zum Lötprozeß gefördert. Durch eine gezielte Einstellung des Pulverdosierers läßt sich somit der Anteil des zugeführten pulverförmigen Zusatzwerkstoffes sehr genau und reproduzierbar einstellen. Insbesondere kann die Zufuhr des Zusatzwerkstoffes den jeweiligen Prozessen individuell angepaßt werden.

Nach einer weiteren Ausgestaltung der Erfindung besteht der Zusatzwerkstoff aus niedrigschmelzendem Metallpulver, dem gegebenenfalls Flußmittel beigesetzt ist. Aufgrund des geringen Schmelzpunktes des eingesetzten Zusatzwerkstoffes ist dafür Sorge getragen, daß der Zusatzwerkstoff sicher in die flüssige Phase überführt wird und nach dem Erstarren für eine innige Verbindung beziehungsweise Beschichtung der Werkstücke sorgt.

Gemäß der Erfindung wird der Zusatzwerkstoff während des Fügevorganges dem Lötprozeß im wesentlichen kontinuierlich zugeführt, so daß ein stetiger Prozeßablauf gewährleistet ist.

Nach einer anderen Ausgestaltung der Erfindung ist der Plasmastrahl durch einen Schutzgasmantel von dem Atmosphärengas getrennt, wobei der Zusatzwerkstoff dem Lötprozeß ohne Durchbrechung des Schutzgasmantels zugeführt wird. Durch die Zuführung des pulverförmigen Zusatzwerkstoffes innerhalb der außenliegenden Schutzgasdüse wird der Schutzgasmantel nicht durchbrochen, und es ist eine Gefährdung des Lötprozesses durch Atmosphärengase auch bei weitem Abstand zwischen Brenner und Werkstück praktisch ausgeschlossen.

Ein weiterer Vorteil des erfindungsgemäßen Verfahrens liegt auch darin, daß die Einbringung des pulverförmigen Zusatzstoffes, beispielsweise des Lötpulvers, zumindest teilweise im Vorlauf des Plasmabrenners beziehungsweise der Plasmadüse erfolgen kann, so daß ein Verdampfen der niedrigschmelzenden Zinkschicht auf dem Werkstück verhindert wird, da das Plasmagas beziehungsweise der Plasmastrahl nicht direkt auf der Zinkoberfläche brennt, sondern auf der darüberliegenden Lotschicht, welche entweder im festen, teigigen oder flüssigen Zustand vorliegt.

Als vorteilhaft für den Zusatzwerkstoff hat sich eine Korngröße von 80 bis 250 µm erwiesen. Die Schmelztemperatur des Zusatzwerkstoffes beträgt nach einer Ausgestaltung der Erfindung 150 bis 1300° C.

Schließlich hat es sich als äußerst vorteilhaft erwiesen, daß der Zusatzwerkstoff niedrigschmelzendes, feinkörniges Metallpulver, beispielsweise ein Lotwerkstoff oder dergleichen ist, dem gegebenenfalls Flußmittel beigesetzt ist.

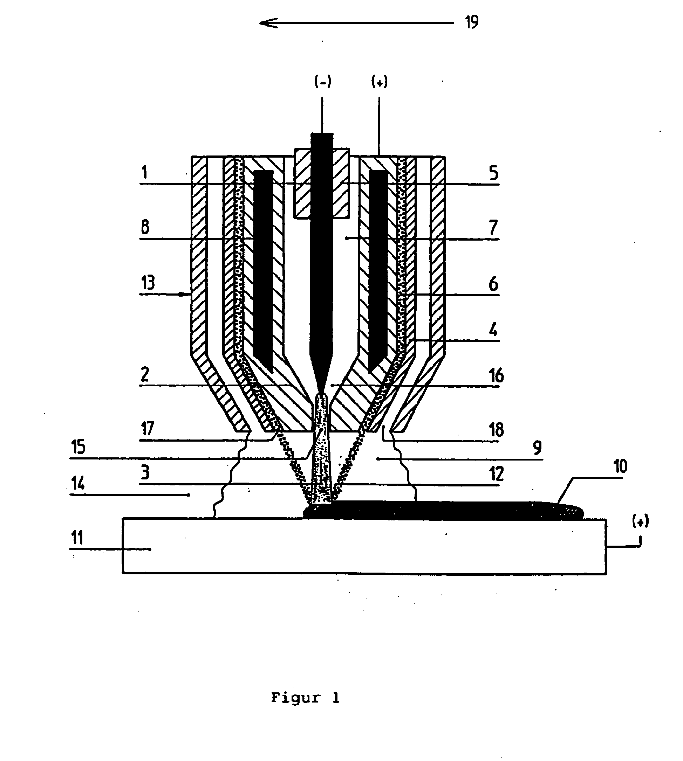

Weitere Merkmale, Vorteile, Anwendungsmöglichkeiten und Ausgestaltungen der Erfindung ergeben sich aus der nachfolgenden Beschreibung eines in der Figur dargestellten Ausführungsbeispieles.

Die einzige Figur zeigt in schematischer Darstellung ein Ausführungsbeispiel einer Vorrichtung zum Plasma-Löten unter Zufuhr von pulverförmigem Zusatzwerkstoff, der in dem erfindungsgemäßen Verfahren verwendet sein kann.

Der für das Plasma-Pulver-Löten benötigte Plasmastrahl 3, wird mit Hilfe eines Plasmabrenners 13 erzeugt. Der Plasmabrenner 13 besitzt einen Kathodenraum 7 für eine Elektrode 1, insbesondere eine Wolframelektrode. Ausgangsseitig schließt sich an den Plasmabrenner 13 eine Plasmadüse 2 mit einem Austritt 15 für den Plasmastrahl 3 an. Der Hauptlichtbogen des Plasmabrenners 13 brennt zwischen der Elektrode 1 und dem Teil 11, welches beispielsweise ein mit Zink beschichtetes metallisches Werkstück sein kann.

Ein Druckgasstrom, beispielsweise Argon, wird rückseitig dem Plasmabrenner 13 zugeführt, durchläuft den Kathodenraum 7 seitlich der Elektrode 1 und tritt durch den Austritt 15 im Bereich der Plasmadüse 2 aus. In der Lichtbogenzone zwischen der Elektrode 1 und dem Teil 11 wird der Druckgasstrom teilweise ionisiert und durch den verengten Austritt 15 der Plasmadüse 2 eingeschnürt. Hierdurch entsteht ein thermisches Plasma sehr hoher Energiedichte in Form eines Strahls. Zur Zündung des Hauptlichtbogens wird ein mittels Hochfrequenz gezündeter Pilotlichtbogen verwendet, der zwischen der Elektrode 1 und der Plasmadüse 2 brennt. Durch den Pilotlichtbogen wird das Plasmagas ionisiert, so daß genügend Ladungsträger zwischen Elektrode 1 und Teil 11 bereitgestellt werden und der Hauptlichtbogen durch Anlegen der Hauptlichtbogenspannung gezündet werden kann.

Seitlich neben der Plasmadüse 2 ist eine Zufuhrleitung 6 vorgesehen, mit der der pulverförmige Zusatzwerkstoff 12 dem Lötprozeß zugeführt werden kann. Diese Zufuhrleitung 6 endet in einer Pulverdüse 4, die den Austritt 15 im Ausführungsbeispiel ringförmig umfaßt. Es versteht sich jedoch, daß die Zufuhrleitung weder als Ringkanal noch als in den Plasmabrenner 13 beziehungsweise die Plasmadüse 2 integrierter Kanal ausgebildet sein muß.

In dem Plasmabrenner 13 beziehungsweise der Plasmadüse 2 können auch mehrere Einzelkanäle oder ein einziger Zufuhrkanal für den Zusatzwerkstoff 12 angeordnet sein. Des weiteren kann der Zusatzwerkstoff auch durch eine von dem Plasmabrenner 13 gänzlich unabhängige Zufuhrleitung dem Lötprozeß zugeführt werden. Weiterhin ist ein Schutzgaskanal in dem Plasmabrenner 13 vorgesehen, der der Zufuhr von Schutzgas dient. Das Schutzgas tritt aus dem Ausgang 18 aus und bildet einen Schutzgasmantel 9, der das Plasmagas 3 mantelförmig beziehungsweise ringförmig umfaßt. Während der Austritt 15 für das Plasmagas 3 im wesentlichen zentral in dem Plasmabrenner 13 angeordnet ist, ist der Pulverauslaß 17 der Zufuhrleitung 6 seitlich benachbart des zentralen Austritts angeordnet. Noch weiter außerhalb liegt der Ausgang 18 für das Schutzgas.

Durch diese Anordnung ergibt sich der Vorteil, daß der pulverförmige Zusatzwerkstoff 12 dem Plasmastrahl 3 unmittelbar nach Austreten aus dem Austritt 15 zugeführt werden kann. Dies wird auch dadurch begünstigt, daß die Zufuhrleitung 6 für den Zusatzwerkstoff 12 einen Winkel im Bereich von 0° bis 90°, insbesondere von ca. 40°, mit der Hauptaustrittsrichtung des Plasmastrahles 3 einschließt. Da das Schutzgas weiter außerhalb des Pulverauslasses 17 über den Ausgang 18 aus dem Plasmabrenner austritt, wird der Schutzgasmantel 9 durch die Zufuhr des Zusatzwerkstoffes 12 nicht durchbrochen. Insoweit wird von dem Lötprozeß das Atmosphärengas 14 sicher ferngehalten.

Weiterhin ist aus der Figur ersichtlich, daß der Plasmastrahl 3 praktisch nicht oder nur geringfügig direkt mit der Oberfläche des Teils 11 in Kontakt kommt, da die sich unmittelbar im Bereich des Plasmastrahles 3 ausbildende Lotschicht dies verhindert.

In unmittelbarer Nähe des Kathodenraumes 7 beziehungsweise der Plasmadüse 2 und der Zufuhrleitung 6 ist weiterhin eine bevorzugt als Wasserkühlung ausgebildete Kühlvorrichtung angeordnet, die die Temperaturbelastung des Plasmabrenners 13 reduziert und auch die Zufuhrleitungen 6 auf einer unterhalb der Schmelztemperatur des Zusatzwerkstoffes 12 liegenden Temperatur hält. Diese Maßnahme erweist sich insbesondere beim Einsatz von äußerst niedrigschmelzenden Zusatzwerkstoffen 12 als sinnvoll.

Es bleibt zu erwähnen, daß an der Elektrode 1 ein Stromkontakt 5 für die Hauptlichtbogenspannung vorgesehen ist, während der andere Pol der Hauptlichtbogenspannung mit dem Teil 11 verbunden ist. Die hochfrequente Spannung zur Erzeugung des Pilotlichtbogens wird zwischen der Elektrode 1 und der Plasmadüse 2 angelegt. Die Verfahrrichtung des Plasmabrenners 13 relativ zum Teil 11 ist durch den Pfeil 19 angedeutet.

Der Zusatzwerkstoff 12 wird in Pulverform von einem Vorratsbehälter bis hin zum Plasmabrenner 13 mit Hilfe eines Inertgases bevorzugt kontinuierlich gefördert. Bei der Zuführung des Pulvers in den Lötprozeß beziehungsweise den Plasmastrahl 3 wird dieses innerhalb der Brennergeometrie in einen konzentrischen Ringspalt eingeblasen und tritt aus der Pulverdüse 4 aus. Von hier aus gelangt der pulverförmige Zusatzwerkstoff auf das Werkstück und bildet die Lotschicht 10, teilweise gelangt er auch ins Schmelzbad beziehungsweise in den Vorlauf des Plasmastrahls.

### Bezugszeichenliste

- 1: Elektrode
- 2: Plasmadüse
- 3: Plasmastrahl
- 4: Pulverdüse
- 5: Stromkontakt
- 6: Zufuhrleitung
- 7: Kathodenraum
- 8: Kühlvorrichtung/Kühlmedium
- 9: Schutzgasmantel
- 10: Lotschicht
- 11: Teil
- 12: Zusatzwerkstoff
- 13: Plasmabrenner
- 14: Atmosphärengas
- 15: Austritt
- 16: Durchgang
- 17: Pulverauslaß
- 18: Ausgang
- 19: Pfeil

## Patentansprüche

1. Verfahren zum thermischen Fügen von Teilen (11), insbesondere Metallteilen, mittels Plasma-Löten unter Zufuhr von Zusatzwerkstoff (12), insbesondere Lotwerkstoff, insbesondere zum Fügen galvanisch oder feuerverzinkter Halbzeuge, Werkstücke oder dergleichen Teile (11), wobei mittels eines Plasmastrahles (3) der Zusatzwerkstoff (12) geschmolzen auf dem oder den Teilen (11) aufgebracht wird, anschließend der Zusatzwerkstoff (12) erstarrt und die Teile (11) miteinander verbindet, **dadurch gekennzeichnet, dass** ein Plasmabrenner eingesetzt wird, der einen Kathodenraum (7) für eine Elektrode (1) aufweist, bei dem der Hauptlichtbogen als übertragener Plasmastrahl (3) zwischen der Elektrode (1) und dem zu fügenden Teil (11) erzeugt wird, wobei der Zusatzwerkstoff (12) während des Fügevorgangs dem übertragenen Plasmastrahl (3) in Pulverform, insbesondere als feinkörniges Pulver, im wesentlichen kontinuierlich zugeführt wird, an den zu fügenden Teilen (11) verläuft und der Zusatzwerkstoff (12) sich nach dem Abkühlen verfestigt und die zu fügenden Teile (11) verbindet.

2. Verfahren nach Anspruch 1, **dadurch gekennzeichnet, dass** der Zusatzwerkstoff (12) mittels eines Fördergases, insbesondere einem Inertgas, von einem Vorratsbehälter oder dergleichen über eine oder mehrere Zufuhrleitungen (6) oder dergleichen zum übertragenen Plasmastrahl (3) gefördert wird.

3. Verfahren nach einem der Ansprüche 1 oder 2, **dadurch gekennzeichnet, dass** der Zusatzwerkstoff (12) aus niedrigschmelzendem Metallpulver, dem gegebenenfalls Flussmittel beigesetzt ist, besteht.

4. Verfahren nach einem der vorhergehenden Ansprüche, **dadurch gekennzeichnet, dass** der Plasmastrahl (3) durch einen Schutzgasmantel (9) von dem Atmosphärengas (14) getrennt ist und der Zusatzwerkstoff (12) dem übertragenen Plasmastrahl (3) ohne Durchbrechung des Schutzgasmantels (9) zugeführt wird.

5. Verfahren nach einem der vorhergehenden Ansprüche, **dadurch gekennzeichnet, dass** der Zusatzwerkstoff eine Korngröße von 80 bis 250 µm aufweist.

6. Verfahren nach einem der vorhergehenden Ansprüche, **dadurch gekennzeichnet, dass** die Schmelztemperatur des Zusatzwerkstoffes 150 bis 1300 °C beträgt.

## Claims

1. A method for thermally joining parts (11), particularly metal parts, by way of plasma soldering with supply of filler material (12), particularly solder material, particularly for joining electroplated or hot-dip galvanized semifinished products, workpieces, or like parts (11), the filler material (12) being applied in a molten condition to the part(s) (11) by means of a plasma jet (3), the filler material (12) subsequently solidifying and joining the parts (11) with one another, **characterized in that** a plasma burner is used comprising a cathode chamber (7) for an electrode (1) in which the main arc is produced as a transferred plasma jet (3) between the electrode (1) and the part (11) to be joined, the filler material (12) being supplied during the joining process substantially continuously to the transferred plasma jet (3) in powder form, particularly as a fine-grained powder, extending along the parts (11) to be joined, and the filler material (12) consolidating after cooling and connecting the parts (11) to be joined.

2. The method according to claim 1, **characterized in that** the filler material (12) is conveyed by means of a conveying gas, particularly an inert gas, from a storage container, or the like, via one or more feed lines (6), or the like, to the transferred plasma jet (3).

3. The method according to any one of claims 1 or 2, **characterized in that** the filler material (12) consists of a low-melting metal powder, which has optionally a fluxing agent added to it.

4. The method according to any one of the preceding claims, **characterized in that** the plasma jet (3) is separated by an inert-gas shield (9) from the atmospheric gas (14), and the filler material (12) is supplied to the transferred plasma jet (3) without penetrating the inert-gas shield (9).

5. The method according to any one of the preceding claims, **characterized in that** the filler material has a grain size of from 80 µm to 250 µm.

6. The method according to any one of the preceding claims, **characterized in that** the fusion temperature of the filler material is 150°C to 1300°C.

## Revendications

1. Procédé pour la jonction thermique de composants (11), en particulier de composants métalliques, au moyen de brasage plasma par application de matériau d'apport (12), en particulier de matériau de brasage, en particulier pour la jonction de produits semi-finis galvaniques ou zingués à chaud, de pièces à usiner d'usinage ou pièces similaires (11), au moyen d'un jet de plasma (3), le matériau d'apport (12) étant fondu sur le ou les composants (11), ensuite le matériau d'apport (12) étant solidifié et les composants (11) étant reliés entre eux, **caractérisé en ce qu'**on utilise un brûleur plasma qui présente une chambre cathodique (7) pour une électrode (1), où l'arc électrique principal est généré en tant que jet de plasma transmis (3) entre l'électrode (1) et le composant à assembler (11), le matériau d'apport (12) étant amené essentiellement en continu pendant l'opération de jonction au jet de plasma transmis (3) sous forme de poudre, en particulier sous forme de poudres à grain fin, s'étendant le long des composants à assembler (11) et le matériau d'apport (12) se solidifiant après le refroidissement et reliant ainsi les pièces à assembler (11).

2. Procédé selon la revendication 1, **caractérisé en ce que** le matériau d'apport (12) est acheminé au moyen d'un gaz de transport, en particulier d'un gaz inerte depuis un réservoir ou similaire par une ou plusieurs conduites d'amenée (6) ou similaires au jet de plasma transmis (3).

3. Procédé selon l'une des revendications 1 ou 2, **caractérisé en ce que** le matériau d'apport (12) se compose de poudre métallique à bas point de fusion à laquelle est mélangé un fondant le cas échéant.

4. Procédé selon l'une des revendications 1 ou 2, **caractérisé en ce que** le jet de plasma (3) est séparé du gaz atmosphérique (14) par une enveloppe de gaz de protection (9) et que le matériau d'apport (12) est amené au jet de plasma transmis (3) sans percer l'enveloppe de gaz de protection (9).

5. Procédé selon l'une des revendications précédentes, **caractérisé en ce que** le matériau d'apport présente une granulométrie comprise entre 80 et 250 µm.

6. Procédé selon l'une des revendications précédentes, **caractérisé en ce que** la température de fusion du matériau d'apport est comprise entre 150 et 1300 °C.
